# EUROPÄISCHE PATENTANMELDUNG

(11) **EP 1 055 573 A1**
(43) Veröffentlichungstag der Anmeldung: **29.11.2000**
(21) Anmeldenummer: 99110111.4
(22) Anmeldetag: 25.05.1999
(51) Int. Cl.: B60T 7/20, B60D 1/32

(54) **Auflaufbremseinrichtung für gezogene Fahrzeuge**

(71) Anmelder: BPW Bergische Achsen KG, 51656 Wiehl (DE)
(72) Erfinder: Ebbinghaus, Wilfried, Dipl.-Ing., 51588 Wiehl (DE); Dowe, Günter, Dipl.-Ing., 51588 Nümbrecht (DE)
(74) Vertreter: Stenger, Watzke & Ring Patentanwälte

(57) **Zusammenfassung**

Vorgeschlagen wird eine Auflaufbremseinrichtung für gezogene Fahrzeuge mit einem fest mit dem Fahrzeug verbundenen Deichselrohr (1), einem in dem Deichselrohr geführten, mit der Kupplung (3) verbundenen Zugrohr (2), dessen gegenüber dem Deichselrohr (1) zurückgelegter Auflaufweg mittels eines Bremsgestänges auf eine Bremseinrichtung (13, 15, 16) übertragbar ist. In dem Zugrohr angeordnet ist ein Schwingungsdämpfer (4) mit einem Zylinder (5), einem darin geführten Dämpfungskolben (6) mit Überströmquerschnitt (18) und einer Kolbenstange (7). Das eine Ende des Schwingungsdämpfers ist mit dem Deichselrohr (1) und das andere Ende mit dem Zugrohr (2) verbunden. Um die Auflaufbremseinrichtung so weiterzuentwickeln, daß Beschädigungen des Schwingungsdämpfers bei sehr hohen Auszugkräften verhindert werden, ist der Schwingungsdämpfer mit einem zusätzlichen Überströmquerschnitt (21) versehen, der durch ein druckbetätigt öffnendes Ventil (20) verschlossen ist.

## Beschreibung

Die Erfindung betrifft eine Auflaufbremseinrichtung für gezogene Fahrzeuge mit einem fest mit dem Fahrzeug verbundenen Deichselrohr, einem in dem Deichselrohr geführten, mit der Kupplung verbundenen Zugrohr, dessen gegenüber dem Deichselrohr zurückgelegter Auflaufweg mittels eines Bremsgestänges auf eine Bremseinrichtung übertragbar ist, und mit einem aus einem Zylinder, einem darin geführten Dämpfungskolben mit Überströmquerschnitt und einer Kolbenstange zusammengesetzten Schwingungsdämpfer, dessen eines Ende mit dem Deichselrohr und dessen anderes Ende mit dem Zugrohr verbunden ist.

Beim Einsatz von gezogenen Fahrzeugen und insbesondere in Nutzfahrzeuganhängern im Gelände können in der Deichsel kurzzeitig sehr starke Zugbelastungen auftreten. Zu nennen ist z. B. der Fall des Durchfahrens einer Senke, wobei das Zugfahrzeug die Senke bereits verlassen hat, wohingegen der gezogene Anhänger noch den Böschungsbereich der Senke zu überwinden hat. In solchen oder ähnlichen Fahrsituationen können sehr hohe Zugkräfte in der Deichsel wirken, wodurch es zu Beschädigungen des Schwingungsdämpfers kommen kann, der zwischen Zugrohr und Deichselrohr angeordnet ist.

Der Erfindung liegt daher die **Aufgabe** zugrunde, eine Auflaufbremseinrichtung für gezogene Fahrzeuge so weiterzuentwickeln, daß Beschädigungen des Schwingungsdämpfers bei sehr hohen Auszugskräften verhindert werden.

Zur **Lösung** wird bei einer Auflaufbremseinrichtung der eingangs genannten Art vorgeschlagen, daß der Schwingungsdämpfer in der sich beim Ausziehen des Zugrohres einstellenden Durchströmungsrichtung mit einem vergrößerbaren Strömungsquerschnitt versehen ist, der durch ein druckbetätigt öffnendes Ventil regelbar ist.

Durch Einsatz des durch das Ventil kontrollierten zusätzlichen Überströmquerschnittes wird ein degressiver Kennlinienverlauf der Zugkraft in dem Schwingungsdämpfer erreicht. Infolge dieses degressiven Kennlinienverlaufs kann eine maximale Auszugskraft nicht überschritten werden, so daß Beschädigungen der Bauteile des Schwingungsdämpfers selbst bei hohen Auszugskräften verhindert werden.

Vorzugsweise arbeiten die zusätzlichen Überströmquerschnitte erst bei solchen Kräften im Schwingungsdämpfer, die höher liegen als die für eine vollständige Betätigung der Auflaufbremse erforderlichen Kräfte. Hierzu wird mit einer Ausgestaltung vorgeschlagen, daß das Ventil auf einen Öffnungsdruck eingestellt ist, der 5 - 10% niedriger als die zulässige Zugkraft des Schwingungsdämpfers ist.

Weitere Einzelheiten und Vorteile des Gegenstandes der Erfindung werden nachfolgend anhand der zugehörigen Zeichnungen erläutert. Darin zeigen:
- Fig. 1: in teils sehr schematischer Darstellung eine Auflaufbremseinrichtung für einen Nutzfahrzeuganhänger;
- Fig. 2: in einer Detaildarstellung zu Fig. 1 den in der Auflaufbremseinrichtung verwendeten Schwingungsdämpfer;
- Fig. 3: einen Schnitt gemäß III - III in Fig. 2;
- Fig. 4: eine weitere Einzelheit aus der Fig. 2 und
- Fig. 5: eine Darstellung zweier Kennlinien zur Veranschaulichung der Wirkung der erfindungsgemäßen Auflaufbremseinrichtung.

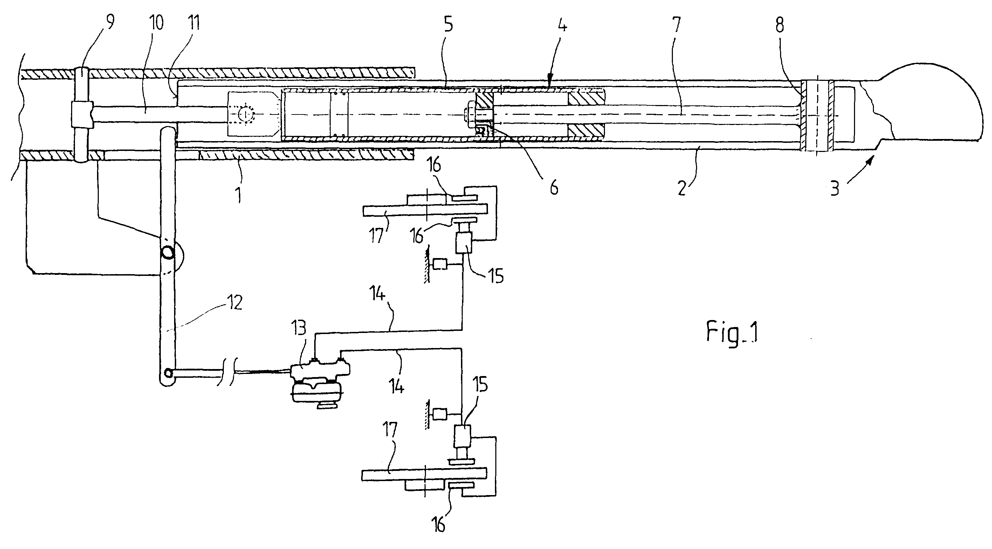

Fig. 1 zeigt das Deichselrohr 1 eines Nutzfahrzeuganhängers, in welchem gleitend ein Zugrohr 2 mit der an dessen Ende ausgebildeten Kupplung 3 geführt ist. In dem Zugrohr 2 befindet sich in an sich bekannter Weise ein Schwingungsdämpfer 4, dessen Aufgabe darin besteht, die in der Auflaufeinrichtung stattfindende Relativbewegung zu dämpfen. Der Schwingungsdämpfer 4 setzt sich aus einem Zylinder 5, einem an dessen Innenseiten dicht geführten Dämpfungskolben 6 sowie einer Kolbenstange 7 zusammen, die abgedichtet aus dem Zylinder heraus geführt ist. Das Ende der Kolbenstange 7 ist über ein Querrohr 8 mit dem Zugrohr 2 verbunden. Über ein weiteres Querrohr 9 ist der Zylinder 5 des Schwingungsdämpfers mit dem Deichselrohr 1 verbunden. Zwischen dem Querrohr 9 und dem Zylinder 5 erstreckt sich eine Zug- und Druckstange 10, die auf einem Teil ihrer Länge in das offene Ende des Zugrohrs 2 hineinragt.

Bei einer Relativbewegung der Teile zueinander, d. h. bei der Auflaufbewegung, verhält sich der Zylinder 5 des Schwingungsdämpfers 4 starr in Bezug auf das Deichselrohr 1, wohingegen der Dämpfungskolben 6 mit der Kolbenstange 7 der Bewegung des in dem Deichselrohr 1 axial geführten Zugrohrs 2 folgt. Selbstverständlich können die Verhältnisse auch umgekehrt sein, d. h. der Zylinder 5 kann mit dem Zugrohr 2 verbunden sein, und die Kolbenstange 7 mit dem daran befestigten Dämpfungskolben 6 mit dem Deichselrohr 1.

Das Ende 11 des Zugrohrs 2 stößt gegen einen Bremshebel 12. Dieser ist Teil eines Bremsgestänges, welches zur Kolbenstange eines Hauptbremszylinders 13 des Anhängers führt. Vom Hauptbremszylinder 13 aus führen zwei Hydraulikleitungen 14 zu Radbremszylindern 15. Mittels der Radbremszylinder 15 können die Bremsklötze 16 der Radbremsen an die Bremsscheiben 17 angedrückt werden.

Die beschriebene Bremseinrichtung kann selbstverständlich auch mit Trommelbremsen ausgerüstet sein. Auch kann die Übertragung auf die Bremsbeläge rein mechanisch erfolgen, d. h. ohne den hydraulisch arbeitenden Bremszylinder.

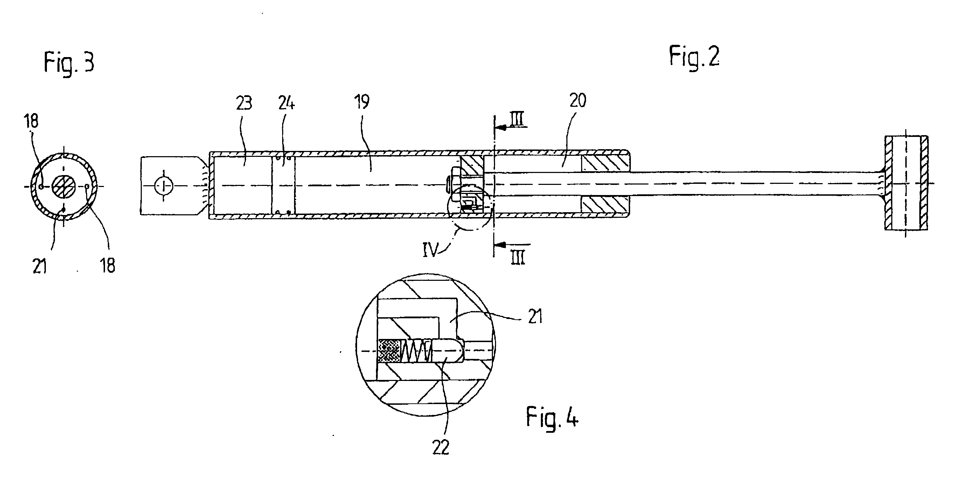

Die Fign. 2 bis 4 zeigen Einzelheiten des Schwingungsdämpfers 4. Dessen Dämpfungkolben, wie insbesondere Fig. 3 erkennen läßt, ist mit mehreren Überströmöffnungen versehen. Erste Überströmöffnungen 18 bilden einen dauernd offenen Übertrittsquerschnitt zwischen dem ersten Kolbenraum 19 und dem zweiten Kolbenraum 20. Diese ersten Überströmöffnungen 18 sind in beiden Richtungen durchgängig.

Zur Bereitstellung von beim Ausziehen des Zugrohres 2 wirksamen Mitteln zur Vergrößerung des wirksamen Strömungsquerschnittes ist zusätzlich zu den ersten Überströmöffnungen 18 ist ein weiterer Überströmquerschnitt 21 in dem Dämpfungskolben 6 ausgebildet.

Die Fign. 3 und 4 stellt einen Schnitt durch den zusätzlichen Überströmquerschnitt 21 dar. Der Überströmquerschnitt ist durch ein Ventil 22 regelbar, das den zusätzlichen Überströmquerschnitt 21 bei Erreichen eines bestimmten Druckniveaus öffnet. Hierbei bewegt sich das in Fig. 4 dargestellte Ventil 22 von dem Kolbenraum 20 in Richtung auf den Kolbenraum 19.

Während also die Überströmquerschnitte 18 ständig aktiv sind, arbeitet der zusätzliche Überströmquerschnitt 21 erst bei Erreichen eines vorgegebenen, erhöhten Druckniveaus. Hierdurch wird ein degressiver Kennlinienverlauf des Schwingungsdämpfers bei Zugbelastung erreicht und Beschädigungen der Dämpferbauteile bei sehr hohen Auszugskräften werden vermieden.

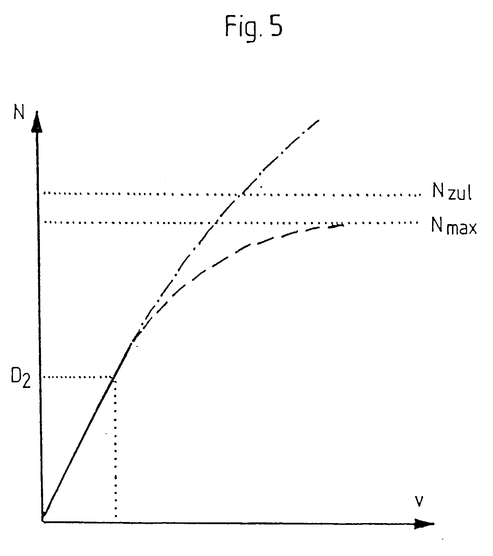

Fig. 5 zeigt den Kennlinienverlauf, wobei auf der Abszisse der Auflaufgeschwindigkeit, d. h. die Relativgeschwindigkeit v zwischen Zugrohr und Deichselrohr und auf der Ordinate die Zugkraft N in den Schwingungsdämpfer eingetragen ist. Ohne den zusätzlichen ventilgesteuerten Überströmquerschnitt 21 ergibt sich ein leicht degressiver Kennlinienverlauf, der in Fig. 5 strichpunktiert dargestellt ist. Bei erfindungsgemäßer Verwendung des zusätzlichen Überströmquerschnittes 21 ergibt sich hingegen ein deutlich degressiver und höchstens bis zu einer maximalen Zugkraft Nₘₐₓ ansteigender Kennlinienverlauf, der in Fig. 5 gestrichelt dargestellt ist. Oberhalb der maximal möglichen Zugkraft Nₘₐₓ liegt die maximal zulässige Zugkraft N_{ZUL}, deren Größe durch die Bauteilfestigkeit bestimmt wird. Der Abstand zwischen N_{ZUL} und Nₘₐₓ stellt eine gewisse Sicherheitsmarge dar.

Der in das Diagramm außerdem eingezeichnete Kennwert D₂ gibt jene Auszugskraft der Zugstange in Auflaufrichtung wieder, wie sie für die Staaten der europäischen Union durch die EG-Richtlinie 71/320 festgelegt ist.

### Bezugszeichenliste

- 1: Deichselrohr
- 2: Zugrohr
- 3: Kupplung
- 4: Schwingungsdämpfer
- 5: Zylinder
- 6: Dämpfungskolben
- 7: Kolbenstange
- 8: Querrohr
- 9: Querrohr
- 10: Zug- und Druckstange
- 11: Ende des Zugrohrs
- 12: Bremshebel
- 13: Hauptbremszylinder
- 14: Hydraulikleitung
- 15: Radbremszylinder
- 16: Bremsklotz
- 17: Bremsscheibe
- 18: Überströmquerschnitt
- 19: Kolbenraum
- 20: Kolbenraum
- 21: zusätzlicher Überströmquerschnitt
- 22: Ventil
- 23: Gasvolumen
- 24: Kolben
- v: Geschwindigkeit
- D₂: Auszugskraft nach EG-Richtline
- N: Kraft
- Nₘₐₓ: maximal mögliche Zugkraft
- N_{zul}: maximal zulässige Zugkraft

## Patentansprüche

1. Auflaufbremseinrichtung für gezogene Fahrzeuge mit einem fest mit dem Fahrzeug verbundenen Deichselrohr (1), einem in dem Deichselrohr (1) geführten, mit der Kupplung (3) verbundenen Zugrohr (2), dessen gegenüber dem Deichselrohr (1) zurückgelegter Auflaufweg mittels eines Bremsgestänges auf eine Bremseinrichtung (13, 15, 16) übertragbar ist, und mit einem aus einem Zylinder (5), einem darin geführten Dämpfungskolben (6) mit Überströmquerschnitt (18) und einer Kolbenstange (7) zusammengesetzten Schwingungsdämpfer (4), dessen eines Ende mit dem Deichselrohr (1) und dessen anderes Ende mit dem Zugrohr (2) verbunden ist,
**dadurch gekennzeichnet,**
daß der Schwingungsdämpfer (4) in der sich beim Ausziehen des Zugrohres (2) einstellenden Durchströmungsrichtung mit einem vergrößerbaren Strömungsquerschnitt versehen ist, der durch ein druckbetätigt öffnendes Ventil (22) regelbar ist.

2. Auflaufbremseinrichtung nach Anspruch 1, dadurch gekennzeichnet, daß der vergrößerbare Strömungsquerschnitt durch einen zusätzlichen Überströmquerschnitt (21) bereitgestellt wird, der durch das Ventil (22) verschließbar ist.

3. Auflaufbremseinrichtung nach Anspruch 1 oder 2, dadurch gekennzeichnet, daß das Ventil (22) auf einen Öffnungsdruck eingestellt ist, der 5 - 10% niedriger als die zulässige Zugkraft des Schwingungsdämpfers (4) ist.

4. Auflaufbremseinrichtung nach einem der Ansprüche 1 bis 3, dadurch gekennzeichnet, daß sich der Überströmquerschnitt (21) mit dem druckbetätigbaren Ventil (22) in dem Dämpfungskolben (6) befindet.

5. Auflaufbremseinrichtung nach einem der Ansprüche 1 bis 4, gekennzeichnet durch ein Gasvolumen (23) in dem der Kolbenstange (7) abgewandten Teil des Zylinders (5), wobei das Gasvolumen (23) durch einen beweglichen Kolben (24) von dem Fluid des Schwingungsdämpfers getrennt ist.
